# EUROPEAN PATENT SPECIFICATION

(11) **EP 1 806 245 B1**
(45) Date of publication and mention of the grant of the patent: **22.04.2009**
(21) Application number: 06256400.0
(22) Date of filing: 15.12.2006
(51) Int. Cl.: B60D 1/38

(54) **Trailer hitching device**
Anhängerkupplungsvorrichtung
Attelage de remorque

(30) Priority: 16.12.2005 GB 0525684
(43) Date of publication of application: 11.07.2007
(73) Proprietor: Armstrong, Kevin, Nr. Solihull, Warwickshire B94 6EW (GB)
(72) Inventor: Armstrong, Kevin, Nr. Solihull, Warwickshire B94 6EW (GB)
(74) Representative: Gray, James

(56) References cited:
- DE-A1- 4 413 694
- DE-U1-8202005 002 77
- GB-A- 2 386 592
- US-A- 3 767 230
- US-A- 3 848 895
- US-A- 5 085 408
- US-A- 5 405 160
- US-A1- 2003 011 168
- US-B2- 6 951 345

## Description

The present invention relates to a device for the hitching of trailers to a connecting member or hitch of a towing vehicle. In the context of the present application the term "trailer" encompasses such towable devices as sleds as well as more conventional wheeled or tracked trailers.

Numerous different arrangements may be provided to connect a towing vehicle to a trailer. Typically each of the trailer and towing vehicle are provided with a connection member which, in use, can be releasably connected. For example, the towing vehicle may be provided with a tow bar having a tow ball and the trailer with a hitch having a cup arrangement adapted to fit to the tow ball. Alternatively, the trailer may be provided with an eye which is sized and shaped so as to be able to receive therethrough a pin, the pin being retained in a mounting of the towing vehicle.

Problems can arise in aligning the connection members so that they can be connected to one another. One option is to keep the towing vehicle stationary and manually push or pull the trailer towards the towing vehicle. This may however not be possible due to such factors as, for example, the weight of the trailer and its contents, and the gradient and nature of the ground upon which the trailer is supported. An alternative option is to keep the trailer stationary and reverse the towing vehicle towards the trailer. The vehicle must be positioned accurately to align the connection members and care must be taken so as not to reverse the tow vehicle too far and into the trailer.

DE 202005002778 discloses a coupling according to the preambles of independant claims 1 or 12 which may be used to draw a trailer to a towing vehicle. The device includes a winch which is mountable to the hitch of the trailer. US 5085408 discloses a trailer connecting guide for use for a boat trailer or the like. The trailer connecting guide assembly includes a pulley, a mounting bolt and a winch cable guide. US 6951345 discloses a hitch alignment device for aligning a ball and socket of a ball and socket-type hitch, the alignment device includes a base with a winch and a pivotable cable mounted upon it. US 3767230 is directed to an apparatus mountable on a front hitch of a trailer and operative to selectable applied combinations of lateral and upward forces to the hitch in a plurality of directions wherein manoeuvres such as lifting, advancing and movement of the trailer at various positions and attitudes can be accomplished.

According to a first aspect of the present invention there is provided a trailer mountable device for drawing a trailer having a hitch towards a vehicle having a towbar, the device comprising a winch having a cable connectable to the vehicle and a steering arrangement operable to steer the trailer, characterised in that the steering arrangement includes a steering handle which is movable to effect steering of the trailer by operation of a wheel braking system on one on the other side of the trailer.

In use, the winch cable is connected to the vehicle and the winch operated to draw the trailer towards the vehicle. The steering arrangement may be utilised to ensure that the hitch is correctly aligned with the towbar.

The winch may by manually operable by a handle thereof. In such an embodiment , the winch is preferably mounted at an elevated position, the elevated position being such that an operator does not need to bend or stoop to operate the winch handle. The winch may be mounted on an upwardly extending strut of the trailer. The strut may be mounted to the structure of the trailer, for example to a portion of the chassis of the trailer. Alternatively, the strut may be mounted to the hitch of the trailer. The strut may be movable relative to the trailer. For example, the strut may be rotatably and/or slidably mounted to the trailer. In a preferred embodiment, the strut is hollow and may be configured so as to guide the winch cable therethrough.

The steering handle is also preferably mounted at an elevated position, the elevated position being such that an operator does not need to bend or stoop to operate the tiller. The steering handle is preferably mounted to an upwardly extending strut of the trailer and more preferably to the same strut to which the winch is mounted. The steering handle may be provided with connection means extending to the trailer wheel braking system. In such an embodiment, the tiller may be provided with wires or cables extending to actuation means of the wheel braking systems.

The winch cable is preferably provided with a connection member adapted so as to be releasably securable to the tow vehicle. The connection member may be fittable to a feature of the towbar of the vehicle, for example a tow ball of the tow vehicle. The connection member may preferably be in the form of a cage which is fittable to the tow ball. The cage may be substantially hemispherical.

The steering arrangement may preferably include a hand brake, such that a user may both steer and brake the trailer utilising the tiller. In such an embodiment the steering handle is preferably biased towards a position whereby the hand brake of the trailer is applied.

According to a further aspect of the present invention there is provided a trailer having a wheeled chassis and a hitch arrangement to enable the trailer to be releasably connected to a tow vehicle, the trailer having a device for drawing the trailer towards the tow vehicle comprising a winch having a cable connectable to the vehicle and a steering arrangement operable to steer the trailer, characterised in that the steering arrangement includes a steering handle which is movable to effect steering of the trailer by operation of a wheel braking system on one or the other side of the trailer.

Features common to the first aspect of the present invention may be embodied by the trailer of the further aspect.

Embodiments of the present invention will now be described with reference to the accompanying drawings in which:
Figure 1 shows a perspective view of a device according to a first embodiment of the present invention mounted to a trailer;
Figure 2 shows a schematic representation of a steering element of the device of figure 1;
Figure 3 shows a plan view of a guide pulley arrangement of the device of figure 1.
Figures 4a and 4b show plan and side views respectively of a hook member of the device of figure 1;
Figure 5 shows a perspective view of a device according to a second embodiment of the present invention;
Figure 6 shows a further perspective view of the embodiment of figure 5;
Figure 7 shows a perspective view of a lower stem portion of the device of figure 5;
Figure 8 shows a perspective view of the tiller portion of the device of figure 5; and
Figure 9 shows a perspective view of a winch; and
Figure 10 shows a perspective view of a device according to a third embodiment of the present invention.

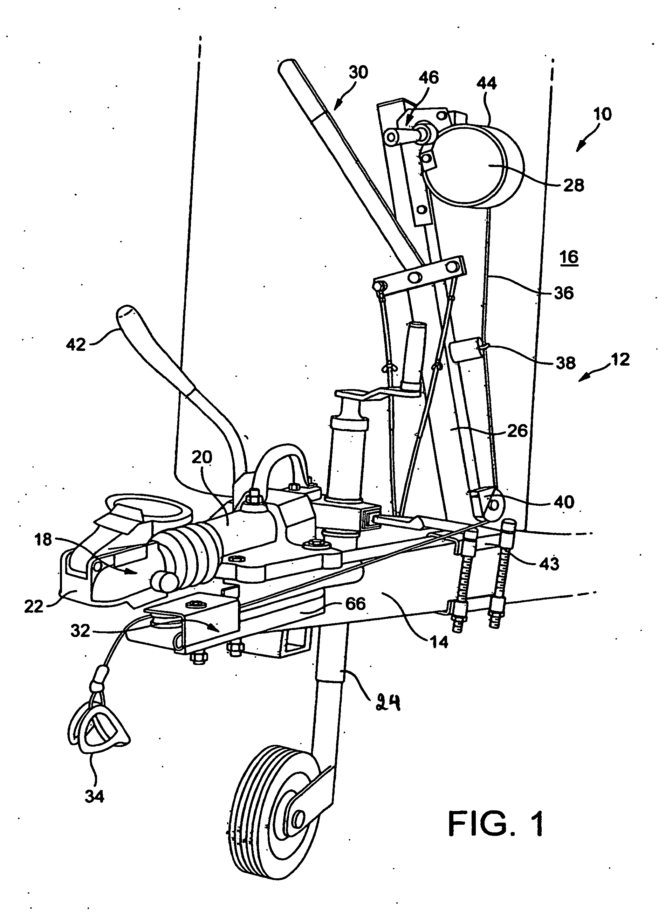

Referring firstly to figures 1 to 4b there is shown a hitching device, generally designated 10, operable to assist in the hitching of a trailer, generally designated 12, to a towing vehicle (not shown). The trailer 12 includes a a frame or chassis having legs 14 which extend forward of the trailer body 16 to define a base for a hitch arrangement, generally designated 18. In the embodiment shown, the hitch arrangement 18 includes a cast metal body 20. The body 20 is mounted to the forward extending legs 14 of the trailer chassis and is provided with a connection member 22 which can be releasably connected to a complementarily configured connection member of a towing vehicle. In the embodiment shown, the connection member 22 is configured so as to be able to receive a ball type connection member of the towing vehicle. The body 20 further acts as a mount for a hand brake lever 42. The trailer 12 is further provided with a height adjustable jockey wheel 24 of conventional type.

The hitching device 10 includes a strut or stanchion 26 to which is mounted a winch 28 and a tiller arrangement 30, a forward cable guide 32 and a cage 34 fittable to a ball type connection member of a towing vehicle. The cage 34 is connected to a cable 36 of the winch 28, which cable 36 extends from the winch 28, through an upper cable guide 38, a pulley 40 and the forward cable guide 32 to the cage 34.

The strut 26 is mounted to one of the chassis legs 14 and is positioned rearwardly of the hitch arrangement body 20 so as to be close to the trailer body 16. The strut 26 is mounted to the chassis leg 14 by a clamp assembly 43. The strut 26 is inclined so that neither it nor the equipment mounted to it projects outwardly of the trailer chassis or body 16. The winch 28 includes a drum 44 around which the cable 36 is wound and a handle 46. The winch 28 further includes a ratchet.

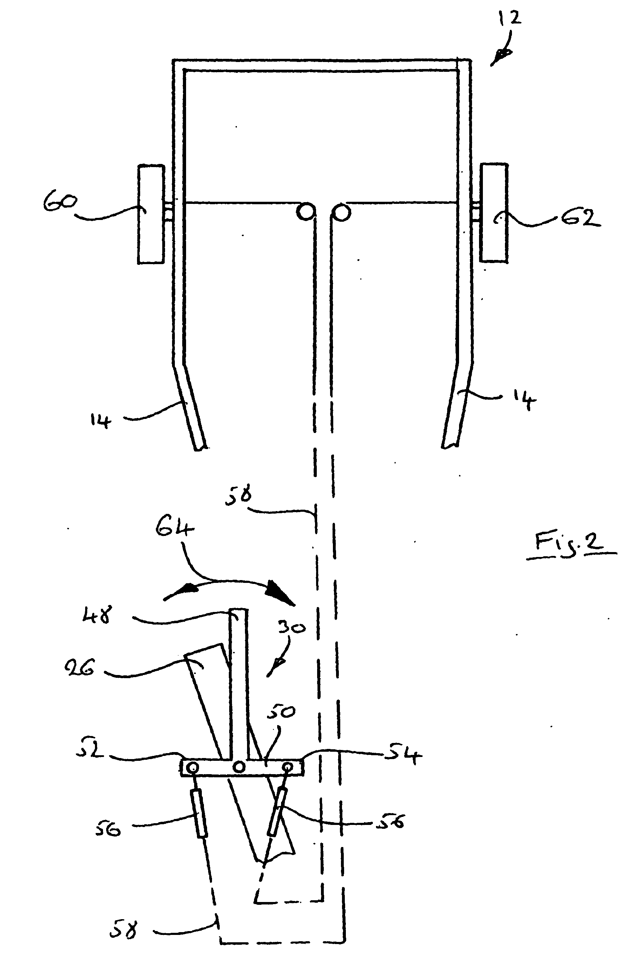

The tiller arrangement 30, which is shown in greater detail in figure 2, includes a handle 48 having a crosspiece 50. The handle 48 is pivotably connected to the strut 26. The opposing ends 52,54 of the crosspiece 50 are connected, via bottle screws 56 to respective cables 58 which extend from the crosspiece 50 to braking arrangements of opposing wheels 60,62 of the trailer 12. Each wheel of the trailer 12 may be provided with a cable operated drum braking arrangement. The drum braking arrangements are normally operable together by the hand brake lever 42. In the present invention, the drum braking arrangements are operable alternatively via the tiller arrangement handle 48 to effect steering of the trailer 12. Movement of the handle 48 as indicated by arrow 64 causes one or other of the cables 58 to be pulled tight and to thus operate the drum braking arrangement to which the cable 58 is connected. Each cable 58 may be connected directly to an actuation mechanism of the drum braking arrangement. Alternatively, each cable 58 may be connected to a cable of the hand brake system.

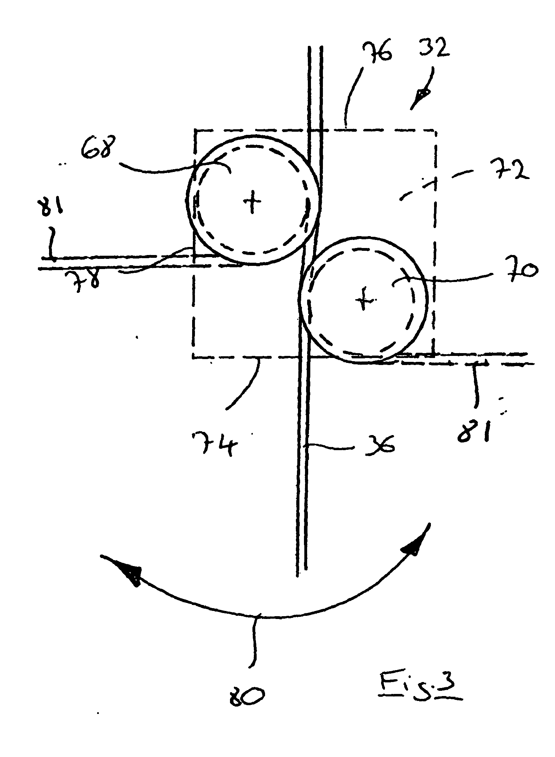

As noted above, the winch cable 36 extends through the forward cable guide 32. The guide 32 includes a base 66 which is mounted to a chassis leg 14 of the trailer 12. Upon the base 66 there are provided a pair of staggered pulleys 68,70 as shown in figure 3. The pulleys 68,70 are surmounted by a shroud 72. The shroud 72 is open at its front 74, rear 76 and to one side 78. The staggered arrangement of the pulleys 68,70 and the open sided nature of the shroud 72 permits the cage end of the cable 36 to extend from the guide 32 at a range of angles as indicated by arrow 80 and broken lines 81 of figure 3.

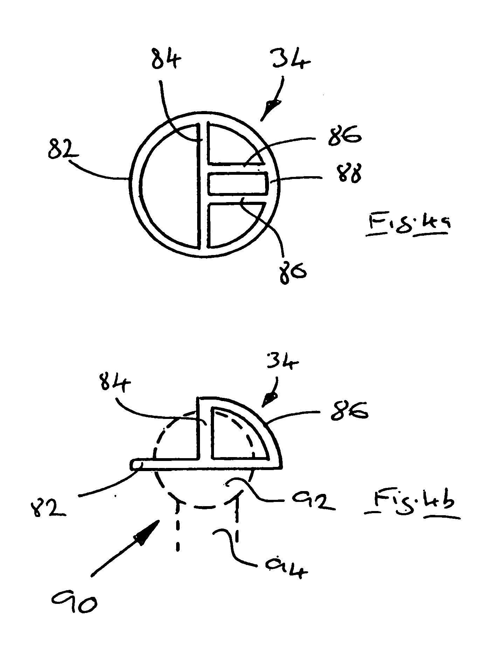

Referring now to figures 4a and 4b, there is shown an embodiment of the cage 34. The cage 34 comprises a substantially circular hoop 82 having a substantially semicircular arch member 84 extending therefrom. A pair of spaced apart substantially quarter-circular strengthening members 86 are provided between the arch member 84 and the hoop 82. The portion 88 of the hoop 82 bounded by the strengthening members 86 provides a convenient attachment location for the cable 36. In use, the cage 34 is configured such that it can fit onto a ball type connection member 90 of a towing vehicle. The connection member 90 comprises a ball 92 which is mounted on top of a shank 94. The provision of the arch and strengthening members 84, 86 of the cage 34 ensures that the hoop 82 remains in the region of the ball 92 and can not move down onto the shank 94 where it can be difficult to subsequently remove. The presence of the cage 34 on the ball 92 also acts to prevent the fitting of the connection member 22 of the trailer to the ball 92.

Operation of the device 10 will now be described. With the trailer 12 in an initial stationary position, the tow vehicle is reversed so that its connection member 90 is moved into close proximity with the trailer connection member 22. The tow vehicle si then parked and its hand brake applied. The winch 28 is placed in mode whereby cable 36 can be withdrawn from the drum 44, and sufficient cable 36 is withdrawn so that the cage 34 can be placed on the ball 92 of the tow vehicle connection member 90. The winch 28 is then operated via the handle 46 to take up any slack in the cable 36. The trailer hand brake 42 is then released and the winch 28 operated to move the trailer 12 towards the tow vehicle.

Should the trailer 12 need to be steered in order to ensure that the trailer connection member 22 aligns with the ball 92, the tiller handle 48 can be operated to brake one or the other of the trailer wheels 60,62. Once the trailer connection member 22 is aligned over the ball 92 the trailer hand brake 42 is applied and the cage 24 removed from the ball 92. The winch 28 can then be operated to take up any remaining slack in the cable 36. The jockey wheel 24 height adjustment mechanism is then operable to lower the trailer connection member 22 onto the ball 92.

The device 10 may also be utilised when decoupling the trailer 22 from the tow vehicle on an incline. The cable 36 may be attached to the tow vehicle prior to disengagement of the connection member 22 from the ball. After the connection member 22 has been decoupled from the ball 92, the winch 28 may be operated to lower the trailer down the incline. This lowering operation may advantageously be employed in connection with boat trailers which require to be moved in a controlled manner down a slip way.

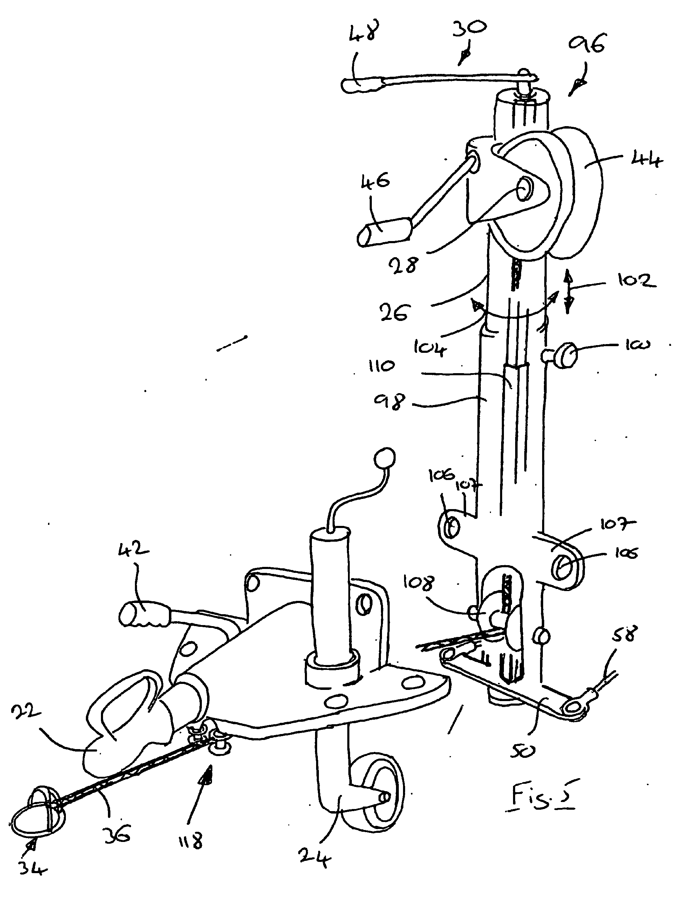

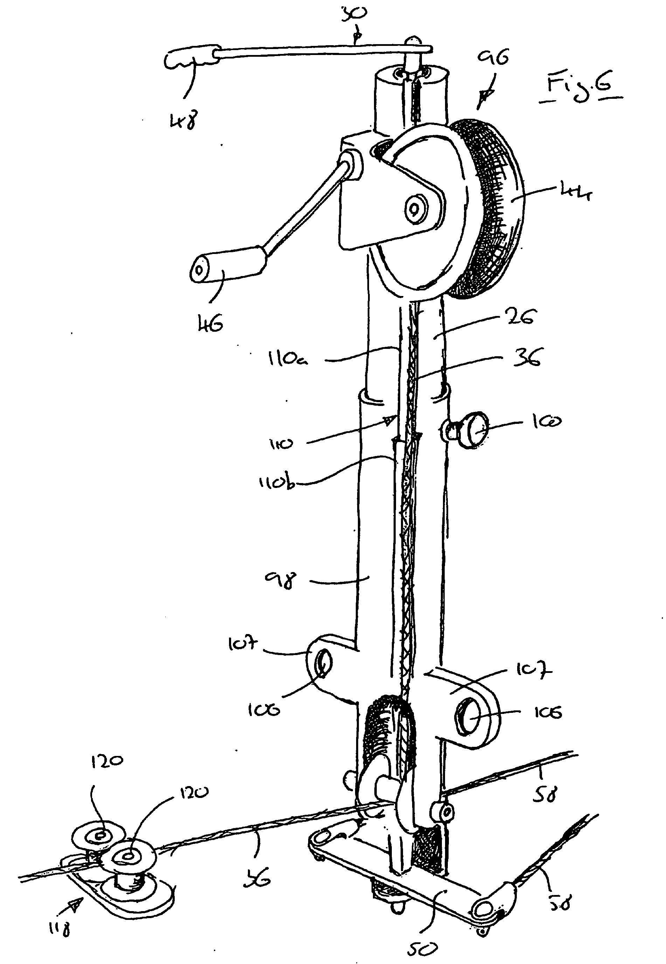

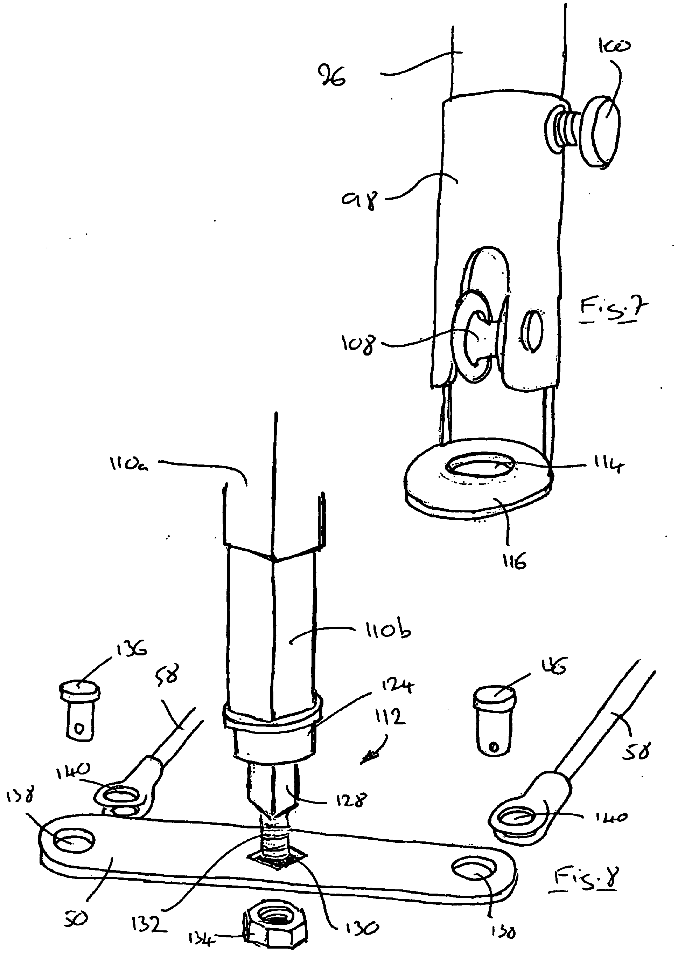

Figures 5 to 8 show an alternative embodiment of a hitching device, generally designated 96. Features common to the embodiment of the hitching device 10 described with reference to figures 1 to 4b are identified with like reference numerals. The device 96 differs in that the strut 26 is mounted to the cast metal body 20 of the trailer hitch arrangement 18. The strut 26 is defined by a tube of substantially circular cross-section which is retained by a bracket 98. The strut 26 is movably retained to the bracket 98 by a lock screw 100 and can by moved vertically as indicated by arrow 102 and rotatably as indicated by arrow 104. The bracket 98 is connectable to the body 20 via the provision of fasteners such as bolts (not shown) through apertures 106 in respective lateral flanges 107 of the bracket 98. The bracket 98 is further provided with pulley 108 around which the winch cable 36 passes. The winch 28 is connected to an upper portion of the strut 26 and is arranged such that the cable 36 extends downwardly through the hollow centre of the strut 26.

The tiller arrangement 30 differs in that the handle 48 is mounted to the top of the strut and extends along an axis substantially perpendicular to the longitudinal axis of the strut 26. The handle 48 is connected to a shaft 110 which extends through the strut 26 and has an end portion 112 which extends through an aperture 114 provided on a base 116 of the mounting bracket 98. So as to accommodate the telescopic movement of the strut 26 with respect to the bracket 98, the shaft 110 comprises upper and lower shaft portions 110a,110b which are telescopically arranged with respect to one another. The portions 110a,110b are substantially square in cross section so as to couple the portions 110a,110b for rotation while permitting them to move telescopically with respect to one another.

A crosspiece 50 is mounted to the shaft end portion 112, and the cables 58 leading to the wheel braking arrangements are connected thereto via pins 136 which extend through aligned apertures 138,140 of the crosspiece 50 and cable ends respectively. The pins 136 are securable by the use of split pins (not shown). In the embodiment shown, the shaft end portion 112 includes a bearing 124 which is receivable in the aperture 114 at the base 116 of the bracket 98, a drive portion 128 having a substantially square cross-section which is receivable in a correspondingly shaped aperture 130 of the crosspiece 50, and a threaded portion 132. The threaded portion 132 is arranged to receive a nut 134 to retain the crosspiece 50 to the shaft 26.

The body 20 is further provided with a forward guide pulley arrangement 118 comprising a pair of spaced pulleys 120 mounted to a bracket 122. The bracket 122 is connected to the underside of the cast body 20. It will be understood that the cable 36 extends downwardly from the winch 28 and through the hollow centre of the strut 26. The cable 36 passes around the pulley 108 so as to extend forward along the underside of the cast body 20 and through the forward guide pulley arrangement 118.

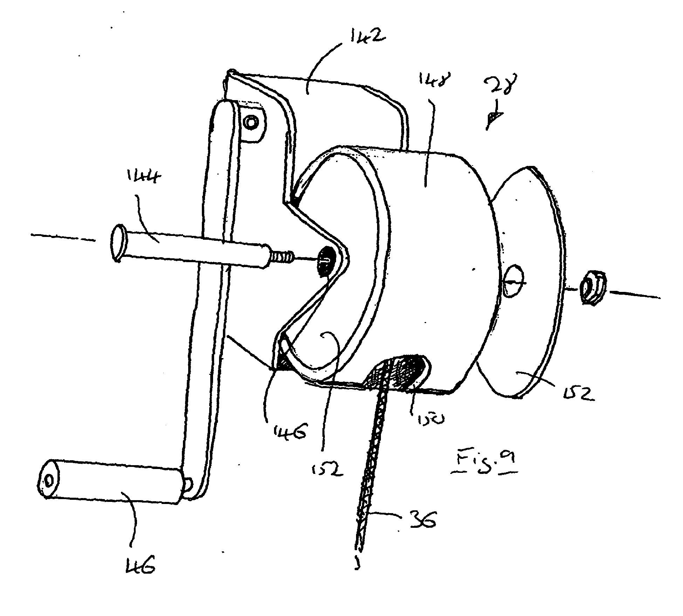

Referring now to figure 9 there is shown a winch generally designated 28. The winch 28 includes a spool or drum (not shown) around which a length of cable 36 can be wound. The drum is mounted to a bracket 142 which in turn is mountable to a strut. The winch 28 further includes a handle 46 which can be rotated so as to cause rotation of the drum via the provision of appropriate gearing (not shown). The drum is rotatably mounted to the bracket 142 via an axle pin 144 which extends through the centre of the drum and aligned apertures 146 of the bracket 142.

When it is needed to wind cable 36 off of the drum, one can set the drum gearing to a free wheel configuration and unwind the cable 36 by pulling on the free end thereof. While this operation is quicker than winding the cable 36 off with the winch handle, it can lead to the problem of the drum rotating faster than the cable 36 is being pulled. This can cause what is termed a "birds nest" where the cable 36 becomes wrapped around the drum and prevents rotation of the drum.

So as to prevent this occurrence, the drum is provided with a shroud 148. The shroud 148 is substantially cylindrical and is provided with an aperture 150 through which the cable 36 extends. The shroud 148 is supported on substantially circular endplates 152 which are provided on opposing sides of the drum between the drum and the inner faces of the bracket 142. The endplates have a diameter which is greater than the drum so that the shroud 148 substantially surrounds but does not contact the drum. In the event that the drum speed when free wheeling exceeds the speed at which the cable 36 is being withdrawn, then the presence of the shroud 148 prevents the cable wrapping itself around the drum to create a birds nest. The shroud 148 may preferably by made from a cylindrical portion of resilient plastics material which is split so as to be open at one side and hence may be considered to be "C" shaped. The shroud 148 can thus be easily snapped on and off the endplates without the need to disassemble the drum from the bracket 142.

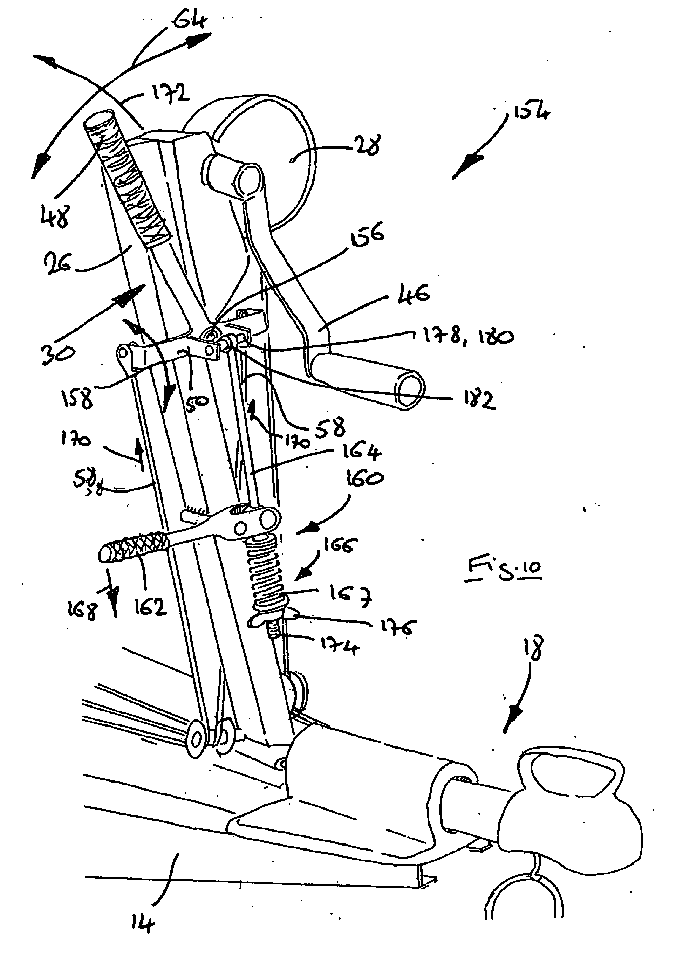

Figure 10 shows a perspective view of a further embodiment of a trailer hitching device generally designated 154. Features common to the above described embodiments are identified with like reference numerals. The handle 48 and crosspiece 50 of the tiller arrangement 30 is connected to the strut 26 by a ball joint arrangement 156. The ball joint arrangement 156 permits the aforementioned side to side pivotal movement of the handle 48 as indicated by arrow 64, and further permits fore and aft pivotal movement of the handle 48 as indicated by arrow 158. The tiller arrangement 30 is further provided with a tilt mechanism generally designated 160. The tilt mechanism 160 comprises an actuation handle 162 mounted to the strut 26, a connecting rod 164 extending from the middle of the tiller cross piece 50, and a spring arrangement 166 having a coil spring 167 provided between the actuation handle 162 and the connecting rod 164. The connecting rod 164 is mounted to a bar 178 carried by a bracket 180 of the tiller crosspiece 50 which extends through an eye 182 of the rod 164.

The tilt mechanism 160 may be operated by moving the actuation handle 162 downwardly as indicated by arrow 168 and thus move the connecting rod 164. This causes the handle 48 and cross piece 50 to tilt forward and pull equally on each cable 58 as indicated by arrows 170. It will be understood that this tilting of the handle 48 and cross piece 50 applies the brakes of the trailer. In order to release the trailer brakes, a user must pivot the handle 48 rearwardly as indicated by arrow 172. Pivoting of the handle 48 in this manner causes compression of the coil spring 167 between the actuation handle 162 and the end 174 of the connecting rod 164 distal to the tiller cross piece 50. A nut 176 is provided on a thread at the distal end 174 of the connecting rod 164 to enable the compression of the spring 167 to be varied.

The trailer can be steered with the handle 48 in the manner previously described. The compressed spring 167 provides a restorative force which urges the handle 48 and cross piece 50 the tiller arrangement 30 to the tilted forward position and reapplies the trailer brakes. The spring arrangement 166 of the tilt mechanism 160 thus provides a "fail safe" operating feature wherein the trailer brakes are automatically applied if the handle 48 is released. The embodiment of figure 10 combines both a steering and hand brake arrangement for a trailer which can be operated by a single handle 48. This arrangement is particularly useful when hitching or unhitching a trailer on an inclined surface where the trailer may either run into or away from the towing vehicle.

## Claims

1. A trailer mountable device (10;96;154) for drawing a trailer (12) having a hitch (18) towards a vehicle having a towbar, the device (10;96;154) comprising a winch (28) having a cable (36) connectable to the vehicle and a steering arrangement operable to steer the trailer (12), **characterised in that** the steering arrangement includes a steering handle (48) which is movable to effect steering of the trailer (12) by operation of a wheel braking system on one or the other side of the trailer (12).

2. A device (10;96;154) as claimed in claim 1 wherein the steering handle (48) is provided with cables (58) extending to actuation means of the trailer wheel braking system.

3. A device (10;96;154) as claimed in claim 1 or claim 2 wherein the steering handle (48) is mounted to an upwardly extending strut (26) of the trailer (12).

4. A device (10;96;154) as claimed in claim 3 wherein the strut (26) is mounted to the chassis structure (14,16) of the trailer (12).

5. A device (10;96;154) as claimed in claim 3 wherein the strut (26) is mounted to the hitch (18) of the trailer (12).

6. A device (96) as claimed in any of claims 3 to 5 wherein the strut (26) is hollow and is configured so as to guide the winch cable (36) therethrough.

7. A device (96) as claimed in any of claims 3 to 6 wherein the strut (26) is telescopic.

8. A device (10;96;154) as claimed in any of claims 3 to 7 wherein the winch (28) is mounted to the strut (26).

9. A device (10;96;154) as claimed in any preceding claim wherein the winch cable (36) is provided with a connection member (34) in the form of a cage fittable to a tow ball (92) of a tow vehicle.

10. A device (154) as claimed in any preceding claim wherein the steering handle (48) is additionally configured to operate a hand brake of the trailer (12).

11. A device (154) as claimed in claim 10 wherein the steering handle (48) is biased to a position wherein the hand brake of the trailer (12) is applied, the handle (48) being movable against said bias to release the hand brake and permit the trailer (12) to be steered by the operation of a wheel braking system on one or the other side of the trailer (12).

12. A trailer (12) having a wheeled chassis (16) and a hitch arrangement (18) to enable the trailer (12) to be releasably connected to a tow vehicle, the trailer (12) having a device (10;96;154) for drawing the trailer (12) towards the tow vehicle comprising a winch (28) having a cable (36) connectable to the vehicle and a steering arrangement operable to steer the trailer (12), **characterised in that** the steering arrangement includes a steering handle (48) which is movable to effect steering of the trailer (12) by operation of a wheel braking system on one or the other side of the trailer (12).

## Patentansprüche

1. Eine Anhänger montierbare Vorrichtung (10, 96, 154) zum Ziehen eines Anhängers (12) mit einer Kupplung (18) und einer Schleppstange, die in Richtung eines Fahrzeuges hin ausgerichtet ist, die Vorrichtung (10, 96, 154) umfasst eine Winde (28), ein Kabel (36), das mit dem Fahrzeug verbindbar ist, und eine Lenkanordnung, die es ermöglicht, den Anhänger (12) zu lenken, **dadurch gekennzeichnet, dass** die Lenkanordnung einen Lenkgriff (48) umfasst, der beweglich ausgebildet ist, und das Lenkverhalten des Anhängers (12) unter Mitwirkung eines Radbremssystems an der einen oder der anderen Seite des Anhängers (12) beeinflusst.

2. Eine Vorrichtung (10, 96, 154) gemäß Anspruch 1, wobei an dem Lenkgriff (48) Kabel (58) vorgesehen sind, die den Stellmittel des Bremssystems des Anhängers zugeordnet sind.

3. Eine Vorrichtung (10, 96, 154) nach Anspruch 1 oder Anspruch 2, wobei der Lenkgriff (48) an einer aufwärts gerichteten Strebe (26) des Anhängers (12) befestigt ist.

4. Eine Vorrichtung (10, 96, 154) gemäß Anspruch 3, wobei die Strebe (26) an der Struktur (14, 16) des Fahrgestells des Anhängers (12) befestigt ist.

5. Eine Vorrichtung (10, 96, 154) gemäß Anspruch 3, wobei die Strebe (26) an der Kupplung (18) des Anhängers (12) befestigt ist.

6. Eine Vorrichtung (96) nach einem der Ansprüche 3 bis 5, wobei die Strebe (26) hohl und so ausgebildet ist, um das Windenkabel (36) zu führen.

7. Eine Vorrichtung (96) nach einem der Ansprüche 3 bis 6, wobei die Strebe (26) teleskopisch ausgebildet ist.

8. Eine Vorrichtung (10, 96, 154) nach einem der vorhergehenden Ansprüche 3 bis 7, wobei die Winde (28) an der Strebe (26) befestigt ist.

9. Eine Vorrichtung (10, 96, 154) nach einem oder mehreren der vorangehenden Ansprüche, wobei das Windenkabel (36) ein Verbindungsmittel (34) in Form eines Gehäuses aufweist, das zu einem Kugelkopf (92) einer Zugmaschine passt.

10. Eine Vorrichtung (154) nach einem oder mehreren der vorhergehenden Ansprüche, wobei der Lenkgriff (48) zusätzlich so ausgelegt ist, um eine Handbremse des Anhängers (12) zu bedienen.

11. Eine Vorrichtung (154) gemäß Anspruch 10, wobei der Lenkgriff (48) in einer Stellung vorgespannt ist, in der er die Handbremse des Anhängers (12) bedient, der Lenkgriff (48) gegen die vorgespannte Kraft bewegbar ist, um hierdurch die Handbremse zu lösen, und es dem Anhänger (12) ermöglicht durch das Bedienen des Radbremssystems, das sich an der einen oder an der anderen Seite des Anhängers (12) befindet, gesteuert zu werden.

12. Ein Anhänger (12) mit einem Rad-Fahrgestell (16) und einer Kupplungsanordnung (18), um eine lösbare Verbindung zu einer Zugmaschine zu ermöglichen, der Anhänger (12) eine Vorrichtung (10, 96, 154) zum ziehen des Anhängers (12) umfasst, die in Richtung der Zugmaschine ausgerichtet ist und eine Winde (28) umfasst, die ein Kabel (36) aufweist, welches mit einer Zugmaschine verbindbar ist und eine Lenkanordnung für das Lenken des Anhängers (12), **dadurch gekennzeichnet**, der Lenkanordnung ein bewegbar ausgebildeter Lenkgriff (48) zugeordnet ist, um den Anhänger (12) über das Radbremssystem, welches sich auf der einen Seite oder der anderen Seite des Anhängers (12) befindet, zu lenken.

## Revendications

1. Dispositif d'attelage de remorque (10, 96, 154) pour la traction d'une remorque (12) présentant un timon (18) dirigé vers un véhicule comportant une barre de remorquage, le dispositif (10, 96, 154) comprenant un treuil (28) avec un câble (36) pouvant être relié au véhicule et un ensemble directionnel pouvant être utilisé pour diriger la remorque (12), **caractérisé en ce que** l'ensemble directionnel comporte une poignée de direction (48) qui peut être déplacée pour diriger la remorque (12) par l'actionnement d'un système de freinage de roue sur l'un ou l'autre des côtés de la remorque (12).

2. Dispositif (10, 96, 154) selon la revendication 1, dans lequel la poignée de direction (48) est équipée de câbles (58) qui s'étendent vers des moyens d'actionnement du système de freinage de roue de la remorque.

3. Dispositif (10, 96, 154) selon la revendication 1 ou 2, dans lequel la poignée de direction (48) est montée sur une barre de liaison (26) s'étendant vers le haut de la remorque (12).

4. Dispositif (10, 96, 154) selon la revendication 3, dans lequel la barre de liaison (26) est montée sur la structure de châssis (14, 16) de la remorque (12).

5. Dispositif (10, 96, 154) selon la revendication 3, dans lequel la barre de liaison (26) est montée sur le timon (18) de la remorque (12).

6. Dispositif (96) selon l'une quelconque des revendications 3 à 5, dans lequel la barre de liaison (26) est creuse et conformée de manière à guider le câble (36) du treuil à travers elle.

7. Dispositif (96) selon l'une quelconque des revendications 3 à 6, dans lequel la barre de liaison (26) est télescopique.

8. Dispositif (10, 96, 154) selon l'une quelconque des revendications 3 à 7, dans lequel le treuil (28) est monté sur la barre de liaison (26).

9. Dispositif (10, 96, 154) selon l'une quelconque des revendications précédentes, dans lequel le câble (36) du treuil est équipé d'un élément d'accouplement (34) sous la forme d'une cage pouvant s'ajuster sur la boule d'attelage (92) d'un véhicule tracteur.

10. Dispositif (154) selon l'une quelconque des revendications précédentes, dans lequel la poignée de direction (48) est en outre conformée pour actionner un frein à main de la remorque (12).

11. Dispositif (154) selon la revendication 10, dans lequel la poignée de direction (48) est rappelée dans une position dans laquelle le frein à main de la remorque (12) freine, la poignée (48) étant mobile à l'encontre du rappel pour relâcher le frein à main et permettre à la remorque (12) d'être dirigée par l'actionnement d'un un système de freinage de roue sur l'un ou l'autre des côtés de la remorque (12).

12. Remorque (12) présentant un châssis (16) équipé de roues et un timon (18) pour permettre à la remorque (12) d'être accouplée de manière détachable à un véhicule tracteur, la remorque (12) comportant un dispositif (10, 96, 154) de traction de la remorque (12) vers le véhicule tracteur comprenant un treuil (28) à câble (36) pouvant être relié au véhicule et un ensemble directionnel pouvant être utilisé pour diriger la remorque (12), **caractérisée en ce que** l'ensemble directionnel comporte une poignée de direction (48) qui peut être déplacée pour diriger la remorque (12) en actionnant un système de freinage de roue sur l'un ou l'autre des côtés de la remorque (12).
